# EUROPEAN PATENT APPLICATION

(11) **EP 1 897 668 A1**
(43) Date of publication of application: **12.03.2008**
(21) Application number: 06018966.9
(22) Date of filing: 11.09.2006
(51) Int. Cl.: B29C 45/14, B29C 45/42, B29C 45/06, B29C 33/12, B29C 31/00, B29C 37/00

(54) **Method and system for automatically feeding inserts to a mold and mold**

(71) Applicant: L&P Swiss Holding Company, 9303 Wittenbach (CH)
(72) Inventor: Synhaeve, Filip, Kortrijkstraat 343 8560 Wevelgem (BE)
(74) Representative: Banzer, Hans-Jörg

(57) **Abstract**

A system for automatically feeding inserts to a mold, which mold is adapted to receive a plurality of inserts to be overmolded, comprises supply means (2) for automatically supplying the plurality of inserts, prearranging means (4, 5) for prearranging the plurality of inserts in a geometrical arrangement for transfer to the mold, and transfer means (6) for substantially simultaneously transferring the plurality of inserts from the prearranging means (5) to the mold (9). By virtue of the system for automatically feeding inserts, a high degree of automization is achieved in an automatic overmolding assembly.

## Description

The present invention relates to a method and system for automatically feeding inserts to a mold or a dummy mold. The present invention further relates to a mold. In particular, the present invention relates to a method and system for automatically feeding inserts in the form of formed wires to a mold of an overmolding apparatus, in which the formed wires are overmolded in order to form an overmolded product, such as a wire mat or a lumbar support. The present invention further relates in particular to a mold in which the formed wires are received and overmolded in order to form the overmolded product.

Overmolding is a well-established technique for forming integrated products having both plastic components and other components, such as metal components. In the process of overmolding, a plurality of inserts, such as metal inserts or electronic devices, is placed into a mold which is closed and into cavities of which plastic is subsequently injected so as to overmold the inserts. Conventionally, inserts are manually inserted into the mold by an operator, while finished products are ejected from the mold, e.g., on a slide. Since new inserts have to be inserted into the mold throughout the operation of the overmolding apparatus, the conventional method of manually inserting inserts into the mold required the permanent presence of an operator. The associated labor costs are a significant cost factor in the production of overmolded products. Further, not only the costs, but also the cycle time, i.e., the number of products produced per time unit, may be limited by the human operator.

It is an object of the present invention to provide a method and system for feeding inserts to a mold which has a high degree of automization. In particular, it is an object to provide an improved method and system for automatically feeding inserts to a mold which has a high degree of independency from an operator and, e.g., allows one operator to simultaneously operate a plurality of overmolding apparatuses. It is a further object of the present invention to provide an improved mold for an overmolding apparatus, in particular a mold which is well suited for receiving automatically fed inserts.

According to the present invention, these objects are achieved by a method for automatically feeding inserts to a mold, a system for automatically feeding inserts to a mold, and a mold as defined by the independent claims. The dependent claims define preferred or advantageous embodiments of the invention.

According to an aspect of the present invention, a method for automatically feeding inserts to a mold which is adapted to receive a plurality of inserts to be overmolded comprises the steps of automatically supplying the plurality of inserts from an insert supply, prearranging the plurality of inserts in a geometrical arrangement for transfer to the mold, and automatically and substantially simultaneously transferring the plurality of inserts to the mold after the prearranging. All of these steps may be performed automatically, i.e., without interference of an operator. Thereby, the method achieves a high degree of independence from the operator. Operator action will typically be only required to recharge the insert supply.

In a preferred embodiment, the automatically supplying has a double functionality of storing a large number of inserts and of feeding these inserts towards a release position for the prearranging. This may be achieved in that the insert supply comprises an extended conveyor device on which an array of inserts is arranged which is substantially linear. By vibrating the conveyor device, e.g., in the form of an extended bar, the array of inserts is moved forwards towards a pick-up position. The speed at which the array of inserts is moved towards the pick-up position may be adjusted, e.g., by adjusting the frequency and/or amplitude of the vibrating motion of the conveyor device. Further preferably, additional conveyor devices may be provided in which additional linear arrays of inserts are fed forward towards a release position. By employing a plurality of conveyor devices and associated insert arrays, the total number of inserts that may be stored in the insert supply may be increased, thereby increasing the time period until the next operator action is required. A further advantage of employing a plurality of conveyor devices and associated linear arrays of inserts is that, in case the plurality of inserts comprises different types of inserts, each of the conveyor devices may be dedicated for a specific type of insert. By employing a plurality of conveyor devices, the insert supply is made modular, i.e., the number and/or type of conveyor devices and arrays of inserts supplied may be varied according to the specific needs of the anticipated usage.

In a preferred embodiment, the geometrical arrangement in which the plurality of inserts is prearranged is substantially identical to the arrangement of the plurality of inserts in the mold. This may be achieved by providing a substantially planar element, e.g. in the form of a table, on which guiding elements are provided for guiding inserts into the geometrical arrangement that corresponds to the geometrical arrangement of the inserts in the mold. The prearranging may include picking up the plurality of inserts from the supply unit, e.g. using a robot arm having a plurality of gripper hands, transporting the inserts to a position vertically above the guiding means of the planar element, and releasing the inserts so as to allow them to drop into the guiding means.

Once the inserts have thus been prearranged, the prearranging may further include verifying that the plurality of inserts has been correctly prearranged. In particular, the verifying may include determining whether the plurality of inserts has been correctly prearranged, or if one or several of the inserts are missing. In the latter case, the prearranging may include supplying additional inserts as replacement for the missing insert(s) and/or outputting a warning signal to the operator.

Further preferably, the plurality of inserts is transferred to the mold while retaining the geometrical arrangement of the prearranged state. In the transferring, the plurality of inserts may then be positioned above a lower mold of the mold and may be simply dropped into the mold. In this process, and in the process of closing the lower mold with a corresponding upper mold, the inserts may be slightly deformed in order to adjust for manufacturing tolerances of the inserts.

According to another aspect of the present invention, a method for overmolding a plurality of inserts is provided, which comprises automatically feeding the plurality of inserts to a mold employing the method according to any one embodiment described above, and overmolding the plurality of inserts in an overmolding apparatus. The overmolding apparatus preferably comprises a plurality of lower molds, e.g., two lower molds, so that inserts may be fed into one of the plurality of lower molds while inserts in another one of the lower molds are being overmolded in the overmolding apparatus.

According to another aspect of the present invention, a system for automatically feeding inserts to a mold is provided, which comprises supply means for automatically supplying a plurality of inserts, prearranging means for prearranging the plurality of inserts in a geometrical arrangement for transfer to the mold, and transfer means for transferring the plurality of inserts from the prearranging means to the mold. Such a system is adapted to perform the method outlined above, so that the various advantages described in conjunction with the above method may be harnessed. In particular, the system is adapted to act autonomously over long periods of time, being independent of regular operator actions.

As already indicated in conjunction with the method described above, the supply means may have a modular configuration in which a plurality of conveyor devices is provided, each of which is adapted to receive an array of inserts and to move the array of inserts towards a release position. Vibrating means, e.g. a motor or several motors, may induce a vibrating motion of the conveyor devices to move the array of inserts.

The prearranging means preferably comprise guiding means for guiding the plurality of inserts into a geometrical arrangement that substantially corresponds to an arrangement of the plurality of inserts in the mold. The guiding means may, in particular, comprise tapering recesses, e.g., V-shaped recesses, for receiving the plurality of inserts, which recesses may be arranged on or recessed in a top surface of a table. A sensor device may also be provided on the top surface of the table in order to verify that the plurality of inserts is correctly prearranged.

The transfer means may preferably be adapted to transfer the plurality of inserts from the prearranging means to the mold while retaining the geometrical arrangement of the inserts. The transfer means may, in particular, be adapted to position the plurality of inserts at a vertical distance from a mold and for dropping the plurality of inserts into the mold. Still further preferably, the transfer means may also be adapted to remove an overmolded product formed by overmolding the plurality of inserts from the mold, i.e., the transfer means has a double functionality of transferring new inserts into the mold and of removing a finished product from the mold.

According to yet another aspect of the present invention, an automatic overmolding assembly is provided which comprises an overmolding apparatus for overmolding a plurality of inserts, the overmolding apparatus comprising a mold, and the system according to any one embodiment described above. Preferably, the overmolding apparatus comprises a plurality of lower molds. A control unit is coupled to the overmolding apparatus and the system for automatically feeding inserts to as to control the latter system in such a way that new inserts are automatically fed into one of the plurality of lower molds while inserts in another one of the plurality of lower molds are being overmolded.

The inserts may in particular be formed wires, and the product formed by overmolding the formed wires may be any arbitrary wire mat or wire framework, in particular a lumbar support. Further, electronic devices may be added to the wire framework. Such electronic devices may fulfil various purposes, such as detecting a person, sensing the weight of a person or similar. The electronic devices may also be overmolded, i.e., one or several of the inserts may be selected from various electronic devices.

According to yet another aspect of the invention, a mold for an insert to be overmolded is provided which comprises first and second half molds and positioning means for automatically positioning the insert in the mold when the second half mold closes the first half mold. The positioning means may comprise a first positioning device statically provided on the first half mold, and a second positioning device statically provided on the second half mold and arranged to cooperate with the first positioning device. One of the first and second positioning devices may comprise at least one tapering recess, e.g., having the shape of a V, and the other of the first and second positioning devices may comprise at least one projection positioned to project into the at least one recess when the first half mold and the second half mold are closed. By virtue of the design of the mold according to the present invention, an insert which is loosely received in the recess is automatically pushed down into the recess by the corresponding projection when the half molds are closed, thereby appropriately positioning the insert in the mold and, possibly, slightly deforming the insert so as to adjust for manufacturing tolerances. In particular, such a mold may advantageously be employed for receiving inserts that are dropped into the mold from a vertical distance.

As can be seen from the above, the various aspects of the present invention enable inserts to be fed to a mold of an overmolding apparatus in a substantially automatic manner, requiring little operator interference, whereby labor-related production costs and the cycle time for manufacturing an overmolded product may be reduced. It is anticipated that the various aspects of the present invention may be advantageously employed in the manufacturing of arbitrary overmolded products, but will be particularly useful in the manufacturing of products including overmolded formed wires, such as in automotive or furniture seating. The present invention may be particularly advantageously employed in manufacturing wire mats or lumbar supports for automotive or furniture seating.

Further, while the combination of the various components of the system for automatically feedings inserts to a mold is particularly advantageous, the individual components thereof are anticipated to have useful applications in a wide variety of different systems. For example, the insert supply unit described herein may be advantageously employed in any system in which a combined feeding and buffering unit is required. It should also be understood that the term "mold" as used herein does not only relate to the mold of an overmolding apparatus, but may be any arbitrary mold. Further, the method and system may also be used for feeding inserts to a dummy mold.

In the following, preferred embodiments of the present invention will be described with reference to the drawings.

Fig. 1 is a schematic top view showing an automatic overmolding assembly including a system for automatically feeding inserts to a mold according to an embodiment of the invention.

Fig. 2 is a schematic view of an overmolded product produced by the assembly of Fig. 1.

Fig. 3 is a schematic front view of a supply unit for formed wires of Fig. 1.

Fig. 4A is a schematic side view of the supply unit of Fig. 3 and a robot arm. Fig. 4B is a schematic perspective view of the robot arm.

Figs. 5A-5C are detail views of a front portion of the supply unit shown in Fig. 4A in various operational stages.

Fig. 6 is a schematic side view of an insert prearrangement table of the assembly of Fig. 1 and of the robot arm.

Fig. 7 is a schematic top view of the insert prearrangement table.

Fig. 8 is a schematic side view of a transfer unit of the assembly of Fig. 1 and of the insert prearrangement table.

Fig. 9 is a schematic front view of the transfer unit shown in Fig. 8.

Fig. 10 is a schematic top view of a lower mold according to an embodiment of the invention.

Fig. 11 is a schematic sectional view of the lower mold and an upper mold according to the embodiment shown in Fig. 10.

Fig. 12 is a schematic perspective view of a prearrangement table and robot arm according to another embodiment of the invention.

Fig. 13 is a top view of another automatic overmolding assembly including a system for automatically feeding inserts according to yet another embodiment of the invention.

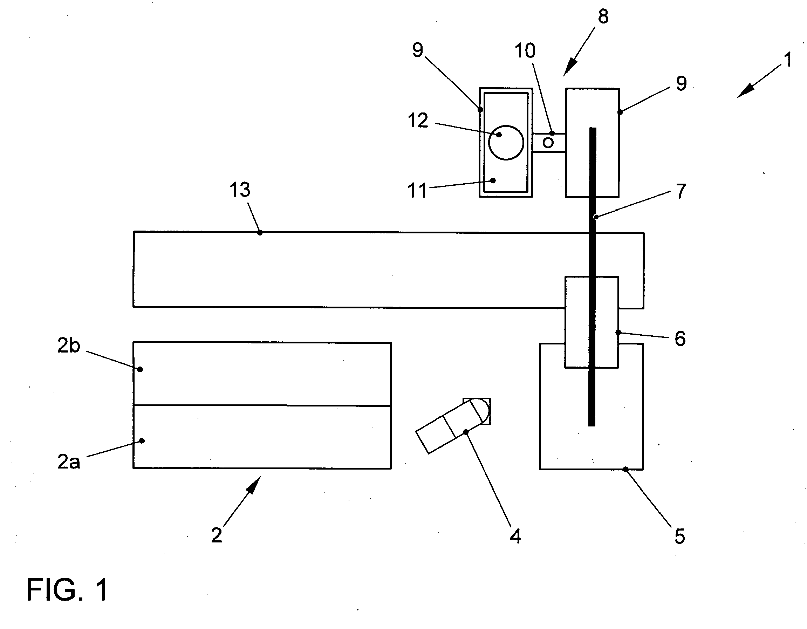

First, with reference to Fig. 1, a system for automatically feeding inserts to a mold according to an embodiment of the present invention will be explained. Fig. 1 shows an automatic overmolding assembly which includes the system for automatically feeding inserts to a mold, which comprises a supply unit 2, a robot arm 4, an insert prearrangement table 5, a transfer unit 6, 7, and an output conveyor 13. The automatic overmolding assembly further comprises an overmolding apparatus 8 having two lower molds 9 that are mounted to a rotatable axis 10 so as to be rotatable, and an upper mold 11 for closing the lower molds 9, which is associated with conventional componentry of an overmolding apparatus, such as channels for supplying the plastic material for overmolding, which is only schematically indicated at 12.

While the operation and construction of the various components of the automatic overmolding assembly shown in Fig. 1 will be more fully described below, the principle function of the individual components will next be briefly outlined in order to illustrate the operation of the assembly. The supply unit 2 provides a supply of inserts to be overmolded by the overmolding apparatus 8, which is fed forward towards a front end of the supply unit 2 facing the robot arm 4. The robot arm 4 grips inserts from a release position of the supply unit 2 and transports the inserts to the insert prearrangement table 5, where they are deposited in a geometrical arrangement that substantially corresponds to the geometrical arrangement of the inserts in the mold. Once a plurality of inserts to be overmolded is prearranged on the insert prearrangement table 5, the transfer unit 6 grips the plurality of inserts and transfers the inserts to the mold which is presently empty, i.e., the right-hand mold in Fig. 1. Thereafter, both lower molds 9 together with their joining axis 10 are rotated by 180°, i.e., the mold into which the inserts have just been deposited is rotated to the left-hand side in Fig. 1, while the mold in which inserts have just been overmolded is rotated towards the right-hand side in Fig. 1. The transfer unit 6 removes the overmolded product from the lower mold 9 and deposits it on the output conveyor 13, where finished products are arranged in stacks and the stacks are output by moving the conveyor 13. While the finished product is removed from the right-hand lower mold 9 in Fig. 1 and new inserts are deposited into this mold, the upper mold 11 closes the lower mold 9 that is now arranged on the left-hand side in Fig. 1, and injection molding is carried out.

The processes just described may be continuously repeated. Operator interference is substantially required only to recharge the insert supply 2 or to unload the output conveyor 13. Therefore, the automatic overmolding assembly shown in Fig. 1 is configured to operate autonomously over long periods of time.

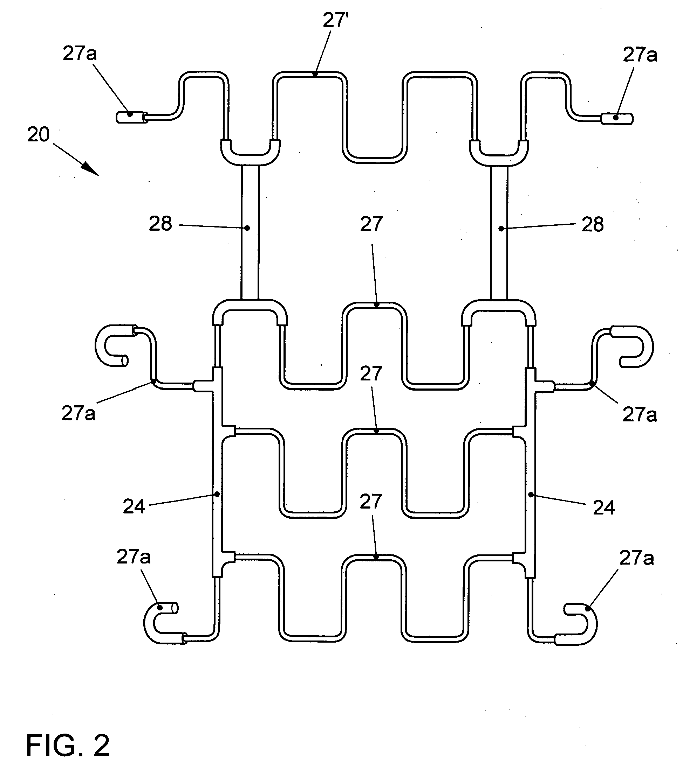

With reference to Fig. 2, an exemplary product 20 that may be produced with the automatic overmolding apparatus of Fig. 1 will be explained. In the example shown, the exemplary product is an overmolded wire mat or wire framework 20, which may be used, e.g., in automotive or furniture seating. The wire mat 20 includes a plurality of transverse wires 27, 27', which are partially overmolded and interconnected by a suitable injectable material that forms overmolded portions 24, 28. More specifically, in the example shown, the three transverse wires 27 are connected by a tube-shaped or cylindrical lateral side portion 24 of plastic material. The transverse wire 27' is connected to one of the transverse wires 27 via a flexible connector 8 which is also made of plastic material and provides the wire mat 20 with a certain degree of flexibility. Free end portions 27a of the transverse wires 27, 27' are formed into a hook-like shape so that they can be engaged with a corresponding eye or hole in a seat frame.

The transverse wires 27, 27', which correspond to the "inserts" as used in the following description, may be made of any suitable material, but are preferably made of a so-called modulated spring wire or music wire, i.e., a wire formed of spring steel, in order to provide sufficient support and comfort durability. The plastic material used for overmolding the transverse wires 27, 27' may be any suitable injectable material, such as polypropylene or polypropylene copolymer, a polyamide, carbon fiber (CF) reinforced polyamide, or glass fiber (GF) reinforced polyamide. While the design of the individual formed wires as well as of the plastic portions may be easily adapted to any anticipated use, it is generally anticipated that those portions of the formed wires that are to be engaged with other components, such as a seat frame, are overmolded for noise reduction. Furthermore, it is generally preferred that those portions of the wire mat in which a high degree of flexibility or elasticity is required are interconnected by flexible plastic connectors.

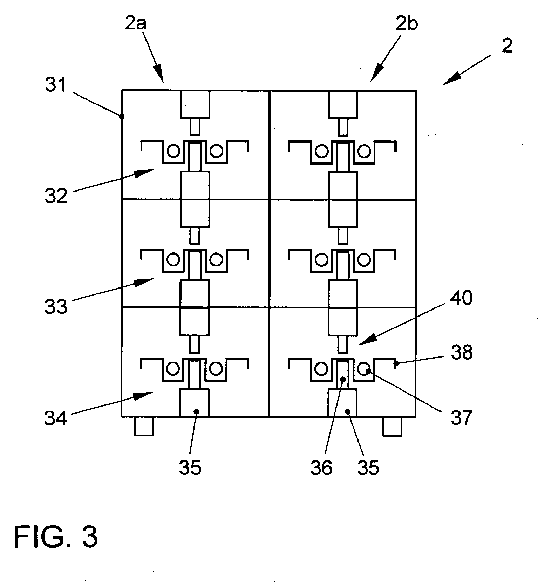

With reference to Figs. 3-11, the construction and operation of various components of the automatic overmolding assembly of Fig. 1 will be described in more detail. Turning first to Fig. 3, a front view of the supply unit 2 is shown. The supply unit comprises a plurality of conveyor devices 32-34 which are arranged in two stacks 2a and 2b, each of which includes three conveyor devices. Each of the conveyor devices is mounted to a frame assembly 31. Since the construction and operation of each conveyor device is identical, only one of them will be explained in detail.

Each of the conveyor devices comprises a conveyor support 35 supporting a conveyor bar 36, which is a longitudinally extending element. On the conveyor bar 36, a plurality of formed wires 38 is arranged, only the frontmost of which is visible in Fig. 3. The conveyor bar 36 cooperates with conveyor rods 37, which are also longitudinally extending elements, to hold the formed wires in the substantially horizontal configuration shown in Fig. 3. A motor (not shown) is provided in the conveyor support 35 and coupled to the conveyor bar 36 for inducing a vibrating motion of the conveyor bar 36. The vibrating motion of the conveyor bar 36 is harnessed for inducing a motion of the formed wires arranged on the conveyor bar towards a front end of the supply unit 2 facing the robot arm 4. The speed of the motion of the formed wires on the conveyor bar 36 may be adjusted by adjusting the frequency of these vibrations, or the amplitude, i.e., the motor power, of these vibrations. Arranged above a front end portion, facing the robot arm 4, of the conveyor bar 36 is a separating assembly 40 for separating a single formed wire from the array of formed wires transported by the conveyor bar 36, which separating assembly 40 will be more fully described below.

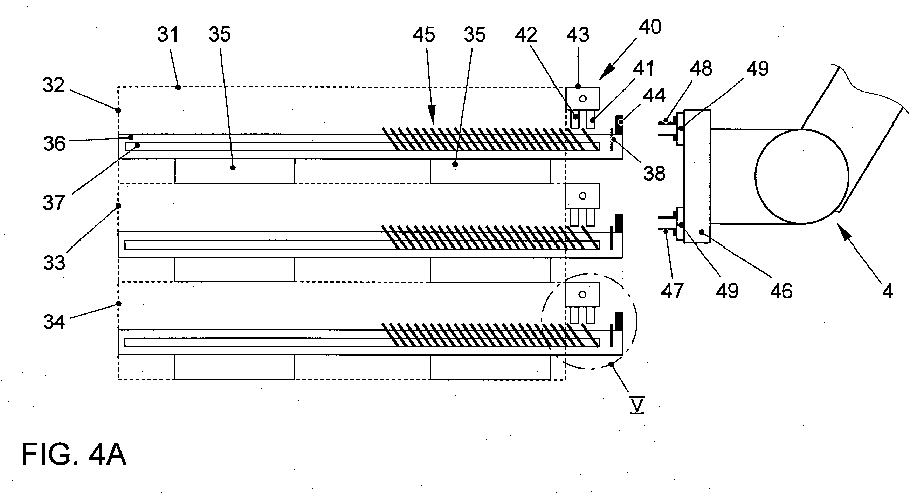

As may be seen from Fig. 4A, which shows a side view of the supply unit 2, a plurality of formed wires is arranged as a linear array 45 on the conveyor bar 36. The formed wires are held in an inclined state by the conveyor rods 37 and the conveyor bar 36. By virtue of the vibrating motion of the conveyor bar 36, the arrays 45 are transported towards the front end of the conveyor bars 36, i.e., to the right hand-side in Fig. 4A. In the state shown, a foremost formed wire of the linear array 45 is trapped in between vertically movable stopper elements 41, 42 of the separating unit 40. Yet another formed wire 38 has already been separated from the linear array 45 and has been moved forward to a release position of the conveyor device in proximity to a fixed stop 44 provided on the conveyor bar 36.

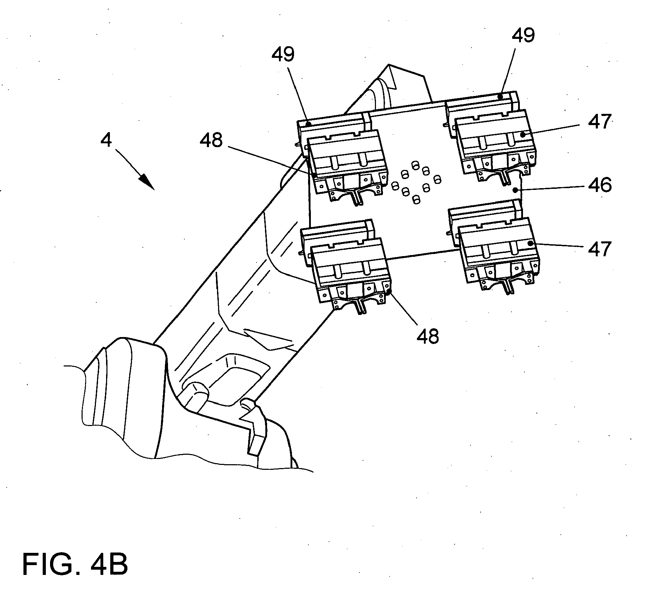

Also shown in Fig. 4A is a front end portion of the robot arm 4. Fig. 4B is a schematic perspective view of the robot arm. Arranged on a plate-like element 46 are gripper hand supports 49, on which gripper hands 47 and 48 are attached. It should be noted that, while two pairs of gripper hands are typically provided on the robot arm, only one gripper hand of each pair is visible in the side view of Fig. 4A. The gripper hands 47, 48 are spaced by a distance which substantially corresponds to a vertical distance of the conveyor devices and, therefore, of formed wires 38 situated in the release positions of the various conveyor devices. Therefore, robot arm 4 may simultaneously grip two formed wires with the gripper hands 47, 48 to lift the pair of formed wires off the respective conveyor devices. The gripper hand supports 49 are designed such that a relative position of the gripper hands 47, 48 may be adjusted. In this manner, the relative position of formed wires may be changed while the wires are being transported by robot arm 4, or the robot arm 4 may be adjusted to different spacings of the conveyor devices.

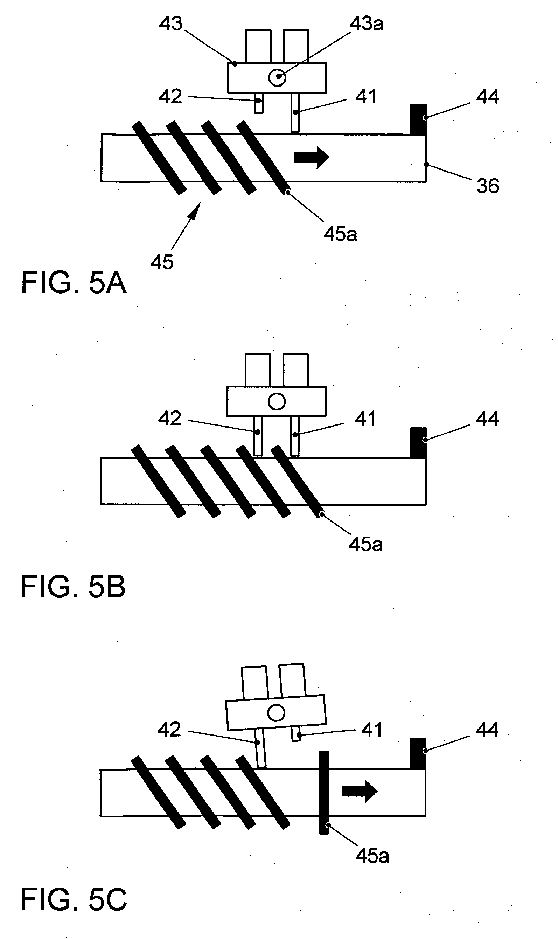

Referring now to Fig. 5, which represents an enlarged view of the encircled region V in Fig. 4A during various operation stages, the operation of the separating unit 40 will be explained. As already indicated above, the separating unit 40 comprises two vertically movable separating elements 41, 42 that are supported by a pivoting element 43, which is pivotably mounted at pivot 43a. The separating elements 41, 42 may be vertically moved in any suitable way, e.g., pneumatically. Fig. 5a shows a state in which a formed wire has just been lifted off from the release position. In this state, the forward separating element 41 is extended, i.e., has maximum length, while the rearward separating element 42 is retracted, i.e., has minimum length. In this configuration of the separating elements, the array of formed wires 45 may move forward, as schematically indicated by an arrow. In particular, the foremost formed wire 45a passes below the rearward separating element 42 and moves until it abuts the forward separating element 41. At this point, the rearward separating element 42 is vertically extended, as shown in Fig. 5b. In this state, the foremost formed wire 45a is trapped in between the separating elements 41, 42. This state may be maintained until wire 45a is to be positioned in the release position. At this point, as shown in Fig. 5c, the forward separating element 41 is retracted, so as to allow the formed wire 45a to pass therebelow. The passing motion of the formed wire 45a may be supported by a slight pivoting of the pivoting member 43.

From the release position proximal to the fixed stop 44, the formed wire 38 is gripped by robot arm 4 and transported to the insert prearrangement table 5 which will be explained next.

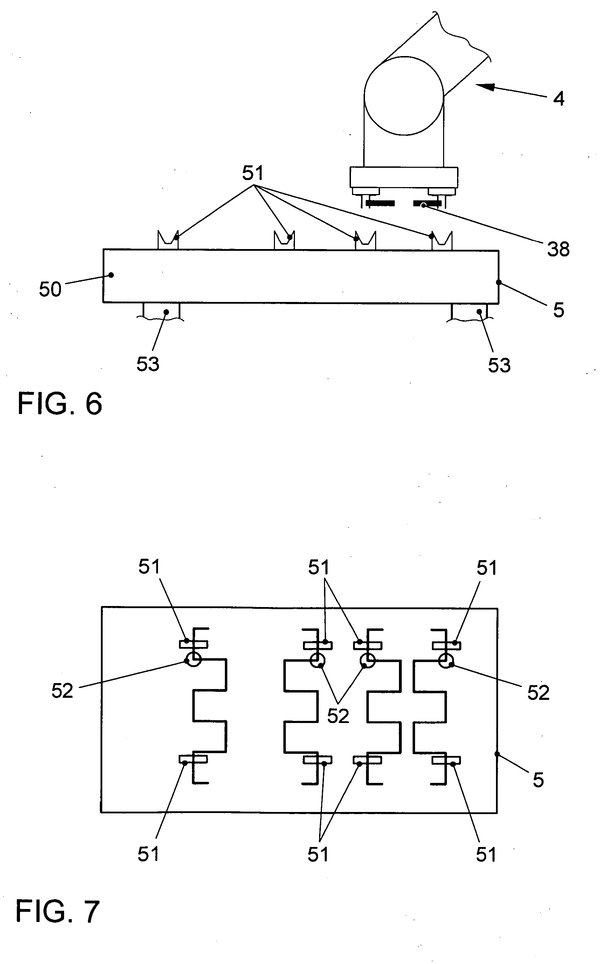

Figs. 6 and 7 show schematic side and top views, respectively, of the insert prearrangement table. The insert prearrangement table 5, or "dummy table", comprises a top plate 50 that is supported by a bottom support structure 53, such as a table-leg-like structure. Arranged on top of the plate 50 is a plurality of V-shaped holders that serve as guiding means, i.e., have the function of guiding a formed wire 38 dropped into the holder 51 to a position that substantially corresponds to the position of the formed wire in the finished product. Preferably, at least two V-shaped holders 51 are provided for each formed wire 38. As is best seen in the top view of Fig. 7, the various V-shaped holders 51 are arranged in such a manner relative to one another, that they guide the various formed wire inserts 38 deposited into them towards a geometrical arrangement that substantially corresponds to the geometrical arrangement of these wires in the finished product.

Also arranged on the top of plate 50 is a plurality of sensors 52, in the example shown, one sensor 52 for each formed wire insert. These sensors 52, e.g., in the form of inductive sensors, sense whether a formed wire insert has been arranged on top of them. The sensors are coupled to a control unit (not shown) which reads out the sensor outputs. From the sensor outputs, the control unit may determine whether all formed wires 38 have been correctly positioned on top of the insert prearrangement table 5, or whether one of the inserts is missing which may happen, e.g., if robot arm 4 drops one of the inserts or fails to correctly pick up one of the inserts. In case one of the inserts is missing or has not been correctly positioned, the control unit may output a warning signal to the operator and/or may ask robot arm 4 to automatically replace the missing insert. It is preferred that the control unit always outputs a warning signal to the operator and does not take further action until some operator input is received, so that the operator may decides as to whether the missing insert may simply be replaced automatically or whether further operator interference is required.

Referring now to Figs. 4 and 6, it is schematically indicated that the robot arm 4 preferaby picks up at least some of the inserts in pairs and also deposits the inserts in pairs on top of the insert prearrangement table 5. In case the vertical distance between different insert conveyors 32-34, which corresponds to the distance between formed wire inserts at pick-up, is different from the distance of these inserts in the finished product, which corresponds to the distance at which the formed wires have to be deposited on top of the insert prearrangement table 5, the formed wire inserts have to be shifted relative to one another during transport from the conveyor devices 32-34 to the top of insert prearrangement table 5. To a certain extent, the V-shaped holders 51 may accommodate for such a difference in relative positions. I.e., when dropped into the V-shaped holders 51, the position of the formed wire inserts is automatically shifted by the tapering slope of the holders 51. In case the formed wire inserts have to be shifted by too large a distance between pick-up from the insert conveyor devices and depositing on top of the insert prearrangement table 5, the repositioning may also be effected by actively repositioning the inserts via shifting the gripper hands of robot arm 4 relative to one another during transport of the formed wire inserts.

After all inserts have been prearranged on top of the insert prearrangement table 5, the inserts are simultaneously transferred from the insert prearrangement table 5 into the mold. This process, carried out by the transfer unit 6, will be described in more detail next.

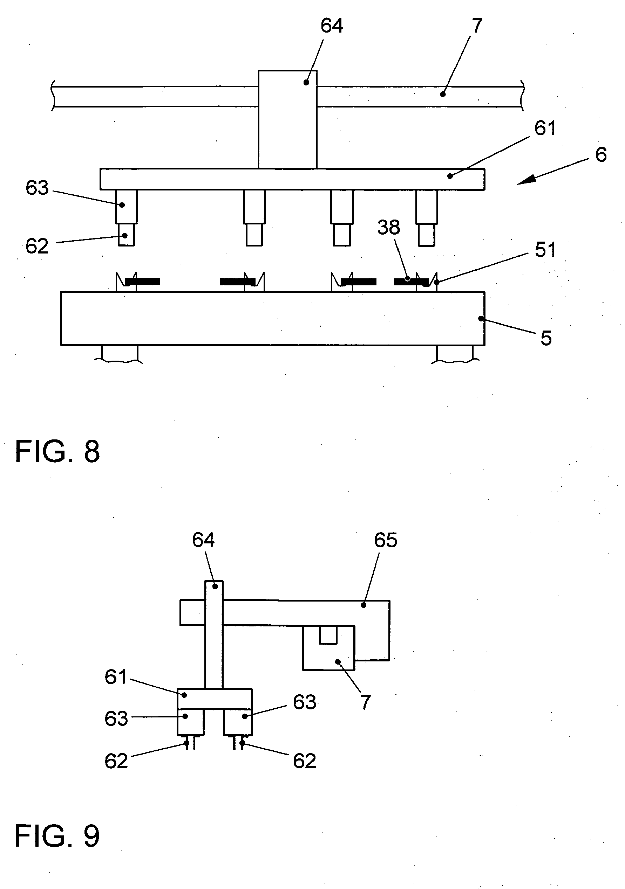

Referring to Figs. 8 and 9, a side view of the transfer unit 6 together with the insert prearrangement table 5 and a front view of the transfer unit 6 are shown, respectively. The transfer unit 6 comprises a plate-like or rod-like element 61, from which a plurality of gripper hands 62 depend. The gripper hands 62 are supported on the plate-like element 61 via gripper hand supports 63 that also include the componentry necessary to actuate the gripper hands 62, e.g. pneumatically. In the example shown, two gripper hands 62 are provided for each formed wire insert to be transported, and the gripper hand supports 63 are fixedly arranged on the plate element 61, i.e., their relative position cannot be altered. The plate-like element 61 is supported on a guide rail 7 via a vertical carrier bar 64 and a horizontal carrier bar 65. The vertical carrier bar 64 is vertically movable relative to the horizontal carrier bar 65, the corresponding drive mechanism (not shown) being provided, e.g., on the horizontal carrier bar 65. The horizontal carrier bar 65, in turn, is movable along guide rail 7 in the longitudinal direction of the latter. The guide rail 7 extends from a position proximal to the insert prearrangement table 5 to a position proximal to the mold 9 into which the formed wire inserts are to be inserted (refer to Fig. 1).

In order to transfer the plurality of formed wire inserts arranged on the insert prearrangement table 5 to the mold, the gripper hands 62 of the transfer unit 6 are lowered towards the top surface of the table 5 by lowering the vertical carrier bar 64 and grip the formed wire inserts arranged on the top surface of the table 5. Subsequently, the gripper hands 62 holding the formed wire inserts are lifted vertically via the vertical carrier bar 64, and the transfer unit 6 is moved along guide rail 7 to a position vertically above a half mold into which the formed wire inserts are dropped. The fact that formed wire inserts may simply be dropped into a half mold is largely due to the specific design of the mold in the automatic overmolding assembly of the present invention which will be explained next.

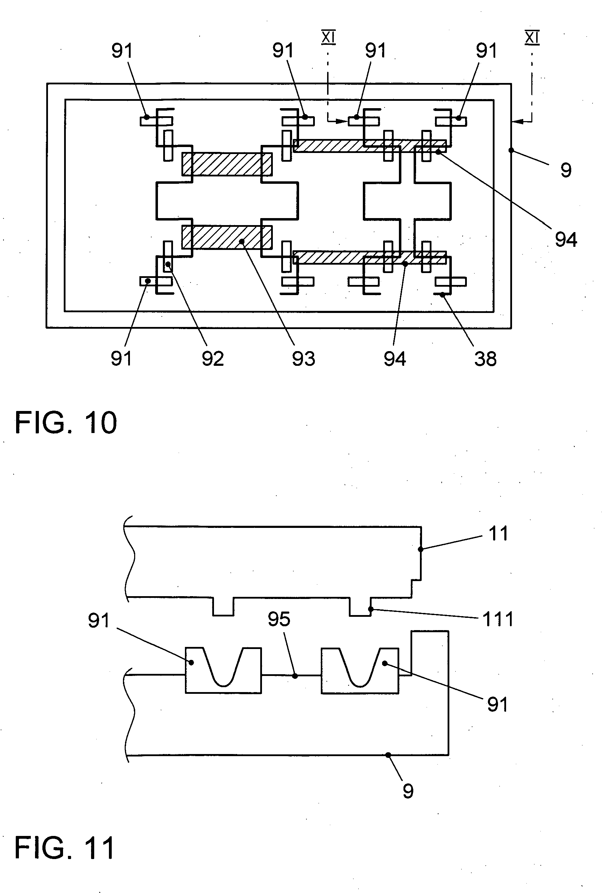

Referring to Fig. 10, a schematic top view of a lower mold 9 is shown. The lower mold 9, into which the formed wire inserts are simultaneously dropped in the same geometrical arrangement in which they have been prearranged on the insert prearrangement table 5, also comprises a plurality of V-shaped holders 91 that, in the example shown, are arranged in the same way as the V-shaped holders 51 on the insert prearrangement table 5. Of course, all other conventional componentry of a half mold may also be incorporated into the half mold 9, such as additional holding structures 92, depressions 93, 94 into which the plastic material is injected, depressions (not shown) for receiving the formed wire inserts, and ejection pins (not shown). The V-shaped holders 91 include a tapering recess in the form of a V, that serves to guide the formed wire inserts that are dropped into these holders towards their correct position for overmolding.

As will be explained with reference to Fig. 11, which shows a schematic cross-sectional view of the first half mold 9 along the line XI-XI in Fig. 10, and a schematic cross-sectional view of the corresponding portion of the second half mold 11, the positioning of the formed wire inserts in the mold is particularly aided by the cooperation of the first half mold 9 and the second half mold 11. More particularly, the cross-sectional view of Fig. 11 shows the V-shaped holders 91 that are recessed into a bottom 95 of the mold cavity. In the automatic overmolding apparatus, the first half mold 9 is horizontally positioned and acts as a lower half mold. The second half mold 11, which acts as upper half mold, comprises projections 111 that project downwardly from the upper mold 11. The projections 111 are positioned such that they project into the recesses of the V-shaped holders 91 when the upper mold 11 and the lower mold 9 are closed. The projections 111 are dimensioned such that, when the upper mold 11 and the lower mold 9 are closed, the bottom end of the projections is spaced from the bottom of the recesses of the V-shaped holders 91 by a distance that corresponds to the height of the insert at this position. Therefore, even when the insert that is dropped into the lower mold 9 is only loosely inserted in the recesses of the V-shaped holders 91, when the upper mold 11 is closed onto the lower mold 9, the insert is pressed downward towards the bottom of the recess of V-shaped holder 91. In this manner, correct positioning of the formed wire inserts is ensured. Further, manufacturing tolerances of the formed wires are also accommodated to a certain extent, as the wires may be slightly deformed as they are pushed downward towards the bottom of the recess of the V-shaped holder 91.

As has already been explained with reference to Fig. 1 above, the overmolding apparatus of the present embodiment comprises two lower molds 9 and is operated in such a manner that, while new formed wire inserts are being inserted into one of the lower molds 9, inserts in the other lower mold 9 are being overmolded. After all new inserts have been inserted into one of the lower molds, and after injection molding has been completed in the other one of the lower molds, the position of the lower molds is interchanged by rotating the lower molds by rotating the axis 10. After completion of this rotation, the transfer unit 6 removes the finished product in the lower mold positioned below it from this lower mold and deposits it on the output conveyor 13. In other words, the transfer unit 6 has the double functionality of transferring new inserts to be overmolded into the lower molds and of removing finished products from the lower molds.

While the present invention has been described with reference to a preferred embodiment above, it is to be understood that various modifications are conceivable.

For example, while the supply unit for formed wire inserts shown in Fig. 3 is comprised of six conveyor devices, the number of conveyor devices may be readily varied as desired. Further, while all conveyor devices have been substantially identical in the above embodiment, conveyor devices of different types may be used. In particular, if the product is composed of different formed wire inserts, the various conveyor devices may be dedicated designs for the various inserts. While the conveyor devices explained above are operated by vibrating a bar-shaped element, it is to be understood that all other transport mechanisms may also be employed for feeding the formed wires towards a release position.

Further, while according to the above explanations, the robot arm 4 preferably picks up inserts from the supply unit 2 in a pairwise fashion, not all formed wire inserts have to be picked up by the robot arm 4 in pairs. More specifically, in the exemplary supply unit 2 discussed above having two stacks of three conveyor devices each, the robot arm preferably picks up a pair of formed wire inserts from each of the stacks simultaneously, but picks up formed wires from, e.g., the lowest conveyor device of each stack one after the other, i.e., a formed wire from the lowest conveyor of the stack 2a is picked up first, the robot arm 4 moves to the right to pick up a formed wire from the lowest conveyor of the stack 2b, and only subsequently moves the pair of formed wires to the insert prearrangement table 5. Further, the inserts do not necessarily have to be dropped onto the top of the insert prearrangement table 5 in a pairwise fashion. Rather, the robot arm may be repositioned before dropping the second insert.

The type and arrangement of inserts discussed above is only exemplary nature, and it is to be understood that other arrangements of inserts may be employed with equal facility. In order to readily accommodate different designs of various products, the top plate 50 of the insert prearrangement table 5 may be preferably easily exchanged. This may be achieved in that the top plate 50 is coupled to the support structure 53 via a quick release mechanism. Similarly, the transfer unit 6 is preferably designed in such a way that the arrangement of gripper hands 62 may be easily adjusted to a new product design, which may be achieved by making the gripper hands 62 movable relative to one another, or by releasably fastening the plate member 61 to the vertical carrier bar 64, so that the full arrangement of plate member 61 and gripper hands 62 may be readily exchanged when a new product is to be manufactured.

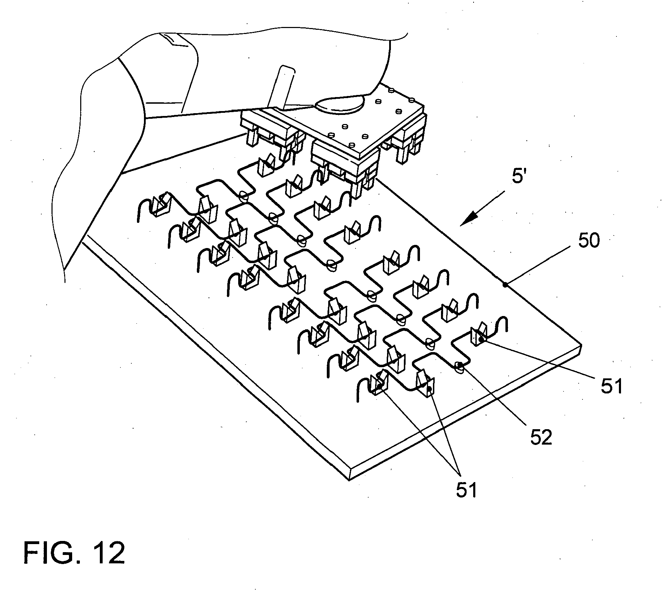

Still further, the mold may be designed to receive a number of inserts that correspond to several overmolded products, and the insert prearrangement table may correspondingly be designed for prearranging a plurality of inserts for several products at the same time, as is schematically shown in Fig. 12. The insert prearrangement table 5' of Fig. 12, while having the same fundamental construction as the insert prearrangement table 5 discussed with reference to Figs. 6 and 7 above, is designed to receive a total of eight inserts, corresponding to two overmolded products comprising four inserts each. The corresponding transfer unit is then preferably also designed to simultaneously transfer all eight inserts from the prearrangement table 5' to the mold.

Further, while in the above embodiment, different units are provided for prearranging the inserts and for transferring the inserts to the mold, these functions may also be integrated into a single unit, as will be explained next.

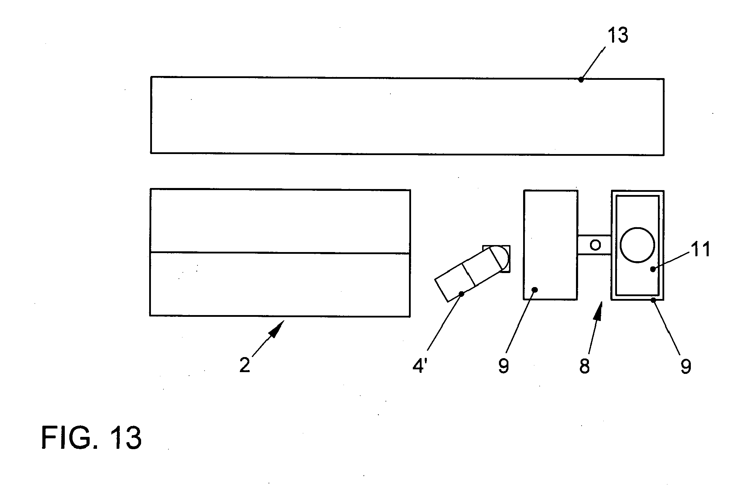

Referring to Fig. 13, another embodiment of an automatic overmolding assembly of the present invention is shown. Units, such as the insert supply unit 2, the overmolding apparatus 8, and the output conveyor 13 that are identical to the first embodiment described above will not be explained in detail. Contrary to the first embodiment, the automatic overmolding assembly of Fig. 13 does not comprise a dedicated prearrangement table and transfer unit. Rather, these functions are integrated with the robot arm 4'. The robot arm 4' is, in this embodiment, configured in such a way that it may both transfer inserts from the insert supply unit 2 to the lower mold 9 and, during transfer, reposition the inserts so as to prearrange them in the geometrical arrangement they are to have in the lower mold 9. This may, for example, be achieved in that the gripper hands are movable relative to one another. In this manner, inserts held by the gripper hands may actively be repositioned by the robot arm 4'. In this case, the robot arm 4' will also be designed to grip more than two inserts at a time.

In summary, according to the present invention, a method and system for automatically feeding inserts to a mold as well as an overmolding method and overmolding assembly employing the same are provided, which provide a high degree of autonomy and independency from an operator. In this manner, both the labor costs associated with the production of a piece of finished product and the cycle time for producing a product may be decreased. The present invention may be applied to the manufacturing of arbitrary overmolded products, including but not limited to overmolded wire mats or lumbar supports for use in automotive or furniture seating.

## Claims

1. A method for automatically feeding inserts to a mold, said mold (9, 11) being adapted to receive a plurality of inserts to be overmolded, comprising the steps:
- automatically supplying said plurality of inserts (38) from an insert supply (2),
- automatically prearranging said plurality of inserts (38) in a geometrical arrangement for transfer to said mold (9, 11), and
- automatically and substantially simultaneously transferring said plurality of inserts (38) to said mold (9, 11) after said prearranging.

2. The method according to claim 1,
**characterized in that**
said insert supply (2) comprises an array (45) of inserts which is substantially linear, and said step of automatically supplying comprises a step of moving said array (45) of inserts towards a position in which an insert (45a; 38) of said array (45) is released for said prearranging.

3. The method according to claim 2,
**characterized in that**
said array (45) of inserts is arranged on a conveyor device (32-34), and said step of moving comprises vibrating said conveyor device (32-34).

4. The method according to claim 2 or 3,
**characterized in that**
said insert supply (2) comprises a further array of inserts which is substantially linear and which is moved towards a position in which a further insert of said further array is released for said prearranging, wherein said insert (45a; 38) of said array (45) and
said further insert of said further array are released substantially simultaneously.

5. The method according to any one of the preceding claims,
**characterized in that**
said geometrical arrangement in which said plurality of inserts (38) is prearranged substantially corresponds to an arrangement of said plurality of inserts (38) in said mold (9, 11).

6. The method according to any one of the preceding claims,
**characterized in that**
at least two of said plurality of inserts are supplied substantially simultaneously from said insert supply (2) and are prearranged substantially simultaneously in said geometrical arrangement.

7. The method according to any one of the preceding claims,
**characterized in that**
said step of prearranging comprises verifying that said plurality of inserts (38) has been correctly prearranged.

8. The method according to any one of the preceding claims,
**characterized in that**
in said step of transferring, said plurality of inserts is simultaneously transferred to said mold (9, 11) while retaining said geometrical arrangement.

9. The method according to any one of the preceding claims,
**characterized in that**
said mold comprises a lower mold (9), and said step of transferring comprises positioning said plurality of inserts (38) at a vertical distance from said lower mold (9) and dropping said plurality of inserts (38) into said lower mold (9).

10. The method according to claim 9,
**characterized in that**
said step of transferring comprises deforming said plurality of inserts (38) so as to adapt to a shape of said lower mold (9).

11. The method according to any one of the preceding claims,
**characterized in that**
said plurality of inserts are selected from formed wires (38) or electronic devices.

12. A method for overmolding a plurality of inserts, comprising the steps:
automatically feeding said plurality of inserts (38) to a mold (9, 11) employing the method according to any one of the preceding claims, and
overmolding said plurality of inserts (38) in an overmolding apparatus (8) to form an overmolded product (20).

13. The method according to claim 12,
**characterized in that**
said overmolding apparatus comprises a plurality of lower molds (9), and said plurality of inserts is fed into one of said plurality of lower molds (9) while inserts arranged in another one of said plurality of molds (9) are being overmolded.

14. The method according to claim 12 or 13,
**characterized in that**
said plurality of inserts are overmolded to form a wire mat (20) or a lumbar support.

15. A system for automatically feeding inserts to a mold, said mold (9, 11) being adapted to receive a plurality of inserts to be overmolded, comprising
- supply means (2) for automatically supplying said plurality of inserts (38),
- prearranging means (45a; 4') for prearranging said plurality of inserts (38) in a geometrical arrangement for transfer to said mold (9, 11), and
- transfer means (6; 4') for substantially simultaneously transferring said plurality of inserts (38) from said prearranging means (4, 5; 4') to said mold.

16. The system according to claim 15,
**characterized in that**
said supply means (2) comprise a conveyor device (32-34) adapted to receive an array (45) of inserts and to move said array (45) of inserts towards a release position.

17. The system according to claim 16,
**characterized in that**
said conveyor device (32-34) comprises vibrating means (35) adapted to induce a vibrating motion of said conveyor device (32-34) to move said array of inserts (45).

18. The system according to claim 16 or 17,
**characterized in that**
said conveyor device (32-34) comprises separating means (40) for separating a foremost insert (45a) from said array (45) of inserts and for positioning said foremost insert (45a) in said release position.

19. The system according to claim 18,
**characterized in that**
said separating means (40) comprise a stopper means (42) for stopping all but a foremost insert of said array of inserts.

20. The system according to claim 19,
**characterized in that**
said separating means (40) comprise a further stopper means (41) for stopping said foremost insert (45a) of said array (45) of inserts, which further stopper means (41) is arranged spacedly from the stopper means (42).

21. The system according to any one of claims 16-20,
**characterized in that**
said supply means (2) comprise a further insert conveyor (33, 34) adapted to receive a further array of inserts and to move said further array of inserts towards a further release position, wherein the insert conveyor (32) and the further insert conveyor (33, 34) are adapted to substantially simultaneously release a foremost insert (45a, 38) of said array of inserts and of said further array of inserts, respectively.

22. The system according to any one of claims 15-21,
**characterized in that**
said prearranging means (4, 5) comprise guiding means (51) for guiding said plurality of inserts (38) into a geometrical arrangement that substantially corresponds to an arrangement of said plurality of inserts (38) in said mold (9, 11).

23. The system according to claim 22,
**characterized in that**
said guiding means (51) comprise at least one tapering recess for receiving said plurality of inserts (38).

24. The system according to any one of claims 15-23,
**characterized in that**
said prearranging means comprise a sensor device (52) adapted to verify that said plurality of inserts (38) is correctly prearranged.

25. The system according to any one of claims 15-24,
**characterized in that**
said transfer means (6) are adapted to transfer said plurality of inserts from said prearranging means (4, 5) to said mold (9, 11) while retaining said geometrical arrangement of said plurality of inserts (38).

26. The system according to any one of claims 15-25,
**characterized in that**
said transfer means (6) are adapted to remove an overmolded product (20) formed by overmolding said plurality of inserts (38) from said mold (9).

27. The system according to any one of claims 15-26,
**characterized in that**
said plurality of inserts are selected from formed wires (38) or electronic devices.

28. An automatic overmolding assembly, comprising
an overmolding apparatus (8) for overmolding a plurality of inserts (38) for forming an overmolded product, the overmolding apparatus comprising a mold (9, 11), and
the system according to any one of claims 15-27 for automatically feeding inserts to said mold (9, 11).

29. The automatic overmolding assembly according to claim 28,
**characterized in that**
said overmolding apparatus (8) comprises a plurality of lower molds (9), and
said assembly comprises a control unit coupled to said overmolding apparatus (8) and said system for automatically feeding inserts, which is adapted to control said overmolding apparatus (8) and said system for automatically feeding inserts such that said plurality of inserts (38) is fed into one of said plurality of lower molds (9) while inserts arranged in another one of said plurality of molds (9) are being overmolded.

30. The automatic overmolding assembly according to claim 28 or 29,
**characterized in that**
said overmolded product is a wire mat (20) or a lumbar support.

31. A mold for an insert to be overmolded, comprising
a first half mold (9) for receiving said insert (38),
a second half mold (11) for closing said first half mold (9) so as to form a closed mold, and
positioning means (9, 11) for automatically positioning said insert (38) in said mold when said second half mold (11) closes said first half mold (9).

32. The mold according to claim 31,
**characterized in that**
said positioning means comprise a first positioning device (91) provided on the first half mold (9) and a second positioning device (111) provided on the second half mold (11) and arranged to cooperate with the first positioning device (91), wherein said first positioning device (91) is stationary relative to said first half mold (9) and said second positioning device (111) is stationary relative to said second half mold (11).

33. The mold according to claim 32,
**characterized in that**
one of said first and second positioning devices comprises at least one tapering recess (91) for receiving said insert (38), and the other of said first and second positioning devices comprises at least one projection (111) positioned to project into said at least one recess (91) when said first half mold (9) is closed by said second half mold (11).

34. The mold according to claim 33,
**characterized in that**
said at least one recess (91) is V-shaped.
